# EUROPÄISCHE PATENTANMELDUNG

(11) **EP 1 711 035 A1**
(43) Veröffentlichungstag der Anmeldung: **11.10.2006**
(21) Anmeldenummer: 05007753.6
(22) Anmeldetag: 08.04.2005
(51) Int. Cl.: H05B 3/50, H05B 3/52, H05B 3/48, H01C 1/028

(54) **Elektrischer Bremswiderstand und Herstellungsverfahren**

(71) Anmelder: DBK David + Baader GmbH, 76870 Kandel (DE)
(72) Erfinder: Petermann, Jürgen, 76872 Minfeld (DE); Buchlaub, Norbert, 76767 Hagenbach (DE)
(74) Vertreter: Grünecker, Kinkeldey, Stockmair & Schwanhäusser Anwaltssozietät

(57) **Zusammenfassung**

Die vorliegende Erfindung bezieht sich auf einen elektrischen Bremswiderstand sowie auf ein Herstellungsverfahren desselben, wobei der elektrische Bremswiderstand mindestens ein Widerstandelement 1, und ein wärmeleitendes Gehäuse 2, das mit einer Isolierstoffmasse 3 ausgefüllt ist und in dem das mindestens eine Widerstandselement 1 eingeschlossen ist, aufweist. Um einen gattungsgemäßen elektrischen Bremswiderstand und ein Herstellungsverfahren der genannten Art dahingehend zu verbessern, dass eine besonders effiziente Wärmeabfuhr und ein einfacher Aufbau des elektrischen Bremswiderstands erreicht werden können, ist das mindestens eine Widerstandselement 1 des elektrischen Bremswiderstands ungehäust in die Isolierstoffmasse 3 eingebettet.

## Beschreibung

Die vorliegende Erfindung bezieht sich auf einen elektrischen Bremswiderstand, der mindestens ein Entladewiderstandselement und ein wärmeleitendes Gehäuse, das mit einer Isolierstoffmasse ausgefüllt ist und in dem das mindestens eine Widerstandselement eingeschlossen ist, aufweist, und ein Herstellungsverfahren.

Ein Bremswiderstand gemäß dem Stand der Technik wird meistens in Elektromotoren eingesetzt, um bei dem Abbremsen eines solchen Elektromotors die durch das Umschalten von einem normalen Motorbetrieb auf einen Generatorbetrieb entstehende elektrische Energie abzuführen, die in Wärme umgewandelt wird. An solche Bremswiderstände werden zunehmend höhere Ansprüche gestellt, wie z.B. bei kleiner Bauweise hohe Wärmemengen schnell abführen zu können.

Bei einem derartigen Bremswiderstand, wie in der DE 203 08 901 U1 gezeigt, besteht das Widerstandselement aus einem Widerstandsdraht, der in einem Metallrohr gehäust und von einer durch radiales Verpressen hoch verdichteten Isolierstoffmasse umschlossen ist. Das Metallrohr ist in einer Isoliermasse eingebettet, die ein Gehäuse mit einer hohen spezifischen Wärmekapazität ausfüllt.

Bei einem derartigen elektrischen Bremswiderstand tritt jedoch das Problem auf, dass die Wärmeabgabe durch die Isolierstoffmasse nicht ausreichend ist, und dass der Aufbau eines solchen Bremswiderstands relativ aufwändig ist.

Der Erfindung liegt daher die Aufgabe zugrunde, einen gattungsgemäßen elektrischen Bremswiderstand und ein Herstellungsverfahren der genannten Art dahingehend zu verbessern, dass eine optimale Wärmeweitergabe durch die Isolierstoffmasse und ein möglichst einfacher Aufbau des elektrischen Bremswiderstands erreicht werden können.

Gemäß der vorliegenden Erfindung wird diese Aufgabe durch einen elektrischen Bremswiderstand mit den Merkmalen des Patentanspruchs 1 gelöst. Weiterhin wird diese Aufgabe durch ein Herstellungsverfahren mit den Schritten des Patentanspruchs 11 gelöst.

Vorteilhafte Weiterbildungen der vorliegenden Erfindung sind Gegenstand mehrerer Unteransprüche.

Dadurch, dass das mindestens eine Widerstandselement des elektrischen Bremswiderstands ungehäust in die Isolierstoffmasse eingebettet ist, kann eine optimale Wärmeweitergabe gewährleistet werden. Da das mindestens eine Widerstandselement ohne zusätzliche Isolierschicht in die Isolierstoffmasse eingelegt ist, erfolgt eine bessere Wärmeabgabe an das an sich besser wärmeabführende wärmeleitende Gehäuse, um eine optimale Wärmeabfuhr während eines Bremsvorgangs des Elektromotors zu garantieren.

Darüber hinaus kann ein besonders einfacher und kostengünstiger Aufbau eines Bremswiderstands erreicht werden, da das mindestens eine Widerstandselement einfach direkt in die Isolierstoffmasse eingebettet ist. Dieser Aufbau unterscheidet sich wesentlich von dem sogenannten Rohrheizkörper der DE 203 08 901 U1, insofern als keine Isolierschicht um das mindestens eine Widerstandselement appliziert werden muss. Ferner ist das Widerstandselement der obengenannten Schrift in einem Metallrohr von einer durch radiales Verpressen hoch verdichteten Isolierstoffmasse umschlossen. Gemäß der vorliegenden Erfindung entfällt der normalerweise notwendige Verpressprozess der sich um das Widerstandselement befindenden Isolierstoffmasse, so dass ein besonders kostengünstiger elektrischer Bremswiderstand hergestellt werden kann.

Wenn man als Isolierstoffmasse des elektrischen Bremswiderstands eine mineralstoffgefüllte Vergussmasse vorsieht, vorzugsweise Siliconkautschuk, kann eine besonders effiziente Wärmeweitergabe an das wärmeleitende Gehäuse erreicht werden. Darüber hinaus wird ein besonders einfaches Herstellungsverfahren eines elektrischen Bremswiderstands erreicht, indem als Isolierstoffmasse eine mineralstoffgefüllte Vergussmasse vorgesehen wird, die einfach nach dem Einlegen des mindestens einen Widerstandselements in das wärmeleitende Gehäuse vergossen wird.

Alternativ kann auch eine aus dem Widerstandselement und der vorher vergossenen umhüllenden Isolierstoffmasse bestehende Vorbaugruppe gebildet werden, die dann in das wärmeleitende Gehäuse eingeschoben wird.

Weiterhin bietet die Verwendung einer mineralstoffgefüllten Vergussmasse aus Siliconkautschuk den Vorteil, dass keine zusätzliche Abdichtung des Gehäuses notwendig ist. Dies ist besonders vorteilhaft gegenüber den herkömmlichen Systemen, bei denen die mit pulvrigem Magnesiumoxid umhüllten Widerstandselemente aufgrund der hygroskopischen Eigenschaften des Magnesiumoxids eine zusätzliche Abdichtung erfordern.

Gemäß einer vorteilhaften Ausführungsform des erfindungsgemäßen elektrischen Bremswiderstands besteht das mindestens eine Widerstandselement aus einem Widerstandsdraht, der durch seine Flexibilität leicht um einen isolierenden Träger gewickelt werden kann, um danach in das wärmeleitende Gehäuse eingeführt zu werden.

Wenn man einen isolierenden Träger entweder aus Glasfaser, aus Mikanit oder aus Keramik vorsieht, um den das mindestens eine Widerstandselement gewickelt ist, kann das mindestens eine Widerstandselement einfach in das wärmeleitende Gehäuse eingelegt werden.

Wenn das mindestens eine Widerstandselement ein Widerstandselement mit einem positiven Temperaturkoeffizienten des elektrischen Widerstands, ein sogenanntes PTC-Widerstandselement, ist, können die selbstregelnden elektrischen Eigenschaften dieser Widerstandselemente ausgeschöpft werden. Die Verwendung solcher Widerstandselemente, beispielsweise aus keramischen Materialien, bietet den Vorteil, dass eine relativ konstante Temperatur des Widerstandselements erreicht werden kann.

Gemäß einer vorteilhaften Ausführungsform des erfindungsgemäßen elektrischen Bremswiderstands wird das wärmeleitende Gehäuse als ein Kühlkörper aus einem Aluminium-Strangpressprofil vorgesehen. Ein solcher Kühlkörper ist durch seine sehr hohe Wärmeleitfähigkeit besonders gut wärmeabführend, insbesondere durch die Auswahl von Aluminium als Gehäusewerkstoff. Aluminium weist daneben eine sehr hohe spezifische Wärmekapazität auf, die deutlich größer ist als beispielsweise Kupfer, Eisen oder Stahl.

Wenn man das mindestens eine Widerstandselement in der Form von mindestens zwei in Reihe oder parallel geschalteten Widerstandselementen vorsieht, kann eine noch bessere Wärmeabfuhr an das wärmeleitende Gehäuse erreicht werden und das System erhält eine deutlich höhere Variabilität.

Dadurch, dass die mindestens zwei in Reihe geschalteten Widerstandselemente durch mindestens eine Rohrniete verbunden sind, kann ein fester Kontakt zwischen den Widerstandselementen gewährleistet werden und die Herstellung ist besonders einfach und kostengünstig. Andere Verbindungsmöglichkeiten der Widerstandselemente, wie z.B. Löten, Stecken, Crimpen oder Schweißen sind aber auch möglich.

Anhand der in den beiliegenden Zeichnungen dargestellten Ausgestaltungen wird die Erfindung im folgenden näher erläutert. Ähnliche oder korrespondierende Einzelheiten des erfindungsgemäßen elektrischen Bremswiderstands sind in den Figuren mit denselben Bezugszeichen versehen. Es zeigen:
- **Fig. 1**: eine Draufsicht auf den erfindungsgemäßen elektrischen Bremswiderstand;
- **Fig. 2**: einen Schnitt durch den erfindungsgemäßen elektrischen Bremswiderstand;
- **Fig. 3**: eine Seitenansicht des erfindungsgemäßen elektrischen Bremswiderstands;
- **Fig. 4**: ein Widerstandselement.

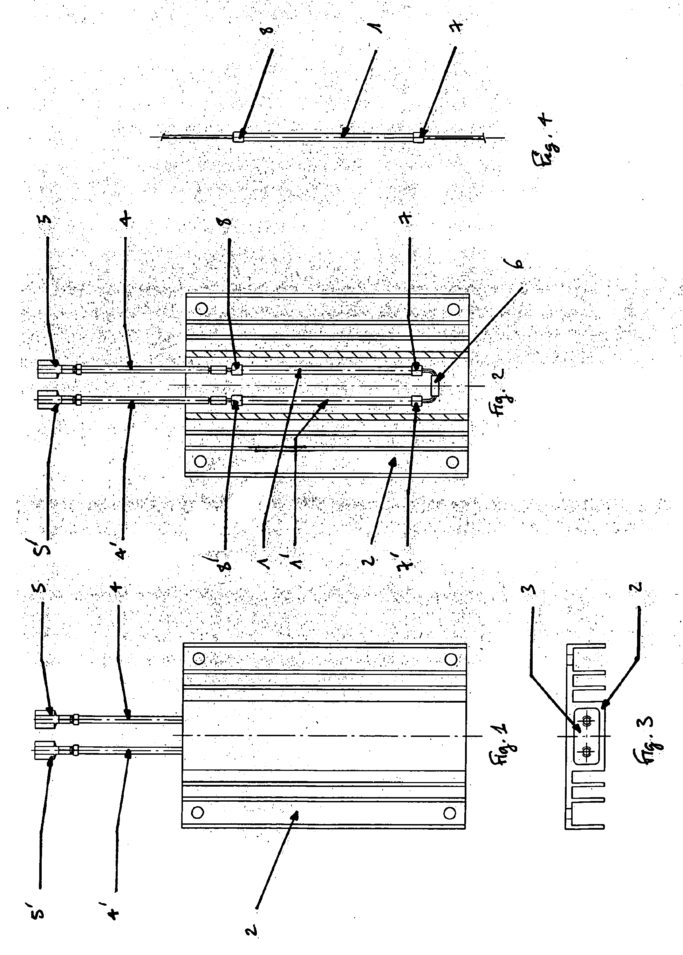

Der erfindungsgemäße elektrische Bremswiderstand weist, wie aus der Fig. 1 ersichtlich, ein wärmeleitendes Gehäuse 2, das vorzugsweise ein Kühlkörper aus einem Aluminium-Strangpressprofil ist, auf. Dieses Aluminiumprofil weist einen zentralen Teil auf, der in der Form eines Parallelepipeds mit einem hohlen Innenraum ausgeführt wird. Dieser hohle Innenraum bzw. diese Kaverne des Aluminiumprofils des wärmeleitenden Gehäuses 2 dient dazu, ein nicht gehäustes Widerstandselement 1 aufzunehmen, das in einer Isolierstoffmasse 3 eingeschlossen ist. Diese mit der Isolierstoffmasse 3 versehene Kaverne des Aluminiumprofils des wärmeleitenden Gehäuses 2 ist aus der Fig. 3 ersichtlich.

Darüber hinaus weist das Aluminiumprofil an jeder Seite des zentralen Teils mehrere Flügelteile auf, die für eine noch bessere Wärmeabfuhr sorgen. Diese Flügelteile, aus der Fig. 3 ersichtlich, sind Platten, die im Wesentlichen senkrecht zu der Basis des wärmeleitenden Gehäuses verlaufen.

Obwohl das wärmeleitende Gehäuse 2 aus einem Aluminium-Strangpressprofil besteht, das mit den obengenannten Merkmalen beschrieben wurde, sind selbstverständlich andere Ausgestaltungen des wärmeleitenden Gehäuses möglich, solange dieses Gehäuse 2 besonders wärmeabführend ist.

Fig. 2 zeigt einen Schnitt durch den erfindungsgemäßen elektrischen Bremswiderstand. Auf dieser Figur sind zwei Widerstandselemente 1, 1' zu sehen, die in der Kaverne des zentralen Teils des wärmeleitenden Gehäuses 2 eingelegt sind. Diese zwei Widerstandselemente 1, 1' sind im Wesentlichen parallel verlaufend in der Isolierstoffmasse 3 eingeschlossen. Darüber hinaus sind die Widerstandselemente 1, 1' in Reihe geschaltet und durch eine Rohrniete 6 elektrisch und mechanisch verbunden.

Wenn die Widerstandselemente 1, 1' PTC-Widerstandselemente sind, werden diese mittels bekannter Kontaktbleche verbunden oder mit einer Litze verlötet. Andere Verbindungstechniken können selbstverständlich angewendet werden.

Wie aus der Fig. 2 ersichtlich, sind die jeweiligen Enden der zwei in Reihe geschalteten Widerstandselemente 1, 1' mit Kontaktkappen 7, 7', 8, 8' versehen. Die herausgeführten Enden der zwei Widerstandselemente 1, 1' sind an Anschlussdrähte oder -litzen 4, 4' angeschlossen, die durch die Kavemenöffnung des Aluminiumprofils des wärmeleitenden Gehäuses 2 nach außen geführt sind. Diese Anschlussdrähte bzw. -litzen 4, 4' sind mit Flachsteckhülsen 5, 5' verbunden, die zum elektrischen Anschluss dienen.

Die in der Kaverne des Aluminiumprofils des wärmeleitenden Gehäuses 2 eingespritzte Isolierstoffmasse 3 ist eine mineralstoffgefüllte Vergussmasse, vorzugsweise Siliconkautschuk. Nachdem das Widerstandselement in die Kaverne des Aluminiumprofils des wärmeleitenden Gehäuses 2 eingelegt wurde, wird es durch die Siliconmasse direkt in der Kaverne vergossen, so dass die Kaverne als Gussform dient. Dies vereinfacht den Herstellungsprozess deutlich.

Alternativ kann auch eine Vorbaugruppe gebildet werden, die aus dem Widerstandselement und einer umhüllenden vergossenen Isolierstoffmasse 3. Eine solche Vorbaugruppe wird dann einfach in die Kaverne des Aluminiumprofils des wärmeleitenden Gehäuses 2 eingeschoben.

Die mineralstoffgefüllte Vergussmasse zeichnet sich durch ihre gute Wärmeleitfähigkeit aus, die eine schnelle Wärmeableitung vom Widerstandselement zum Aluminiumprofil gewährleistet.

Im Folgenden soll die Funktionsweise der einzelnen in den Figuren gezeigten Komponenten gezeigt werden.

Bei dem Bremsvorgang eines Elektromotors entsteht durch das Umschalten von einem normalen Motorbetrieb auf einen Generatorbetrieb elektrische Energie, die abgeführt werden muss. Diese elektrische Energie wird in dem Bremswiderstand in Wärme umgewandelt. Erfindungsgemäß werden die mindestens zwei in Reihe geschalteten Widerstandselemente 1, 1' über die Flachsteckhülse 5, 5' mit dem Elektromotor verbunden. Die durch den Bremsvorgang entstehende elektrische Energie wird in die Widerstandselemente 1, 1' geführt und die dabei erzeugte Wärme wird an die mineralstoffgefüllte Isolierstoffmasse 3 weitergegeben. Diese Wärme wird dann an dem Aluminiumprofil des wärmeleitenden Gehäuses 2 übertragen und durch die große Wärmeaustauschfläche des Aluminiumprofils abgeführt.

Dadurch, dass das Widerstandselement 1 ohne Gehäuse in die mineralstoffgefüllte Isolierstoffmasse 3 eingebettet ist, ist die Wärmeabfuhr des erfindungsgemäßen elektrischen Widerstands besonders effizient. Darüber hinaus ist die Herstellung des erfindungsgemäßen elektrischen Widerstands besonders einfach.

## Patentansprüche

1. Elektrischer Bremswiderstand, der folgende Elemente aufweist:
mindestens ein Widerstandselement (1), und
ein wärmeleitendes Gehäuse (2), das mit einer Isolierstoffmasse (3) ausgefüllt ist und in dem das mindestens eine Widerstandselement (1) ungehäust eingebettet ist.

2. Elektrischer Bremswiderstand nach Anspruch 1, wobei die Isolierstoffmasse (3) eine mineralstoffgefüllte Vergussmasse, vorzugsweise Siliconkautschuk, ist.

3. Elektrischer Bremswiderstand nach einem der Ansprüche 1 oder 2, wobei das mindestens eine Widerstandselement (1) ein Widerstandsdraht ist.

4. Elektrischer Bremswiderstand nach einem der Ansprüche 1 bis 3, wobei das mindestens eine Widerstandselement (1) um einen isolierenden Träger aus Keramik oder Glasfaser gewickelt ist.

5. Elektrischer Bremswiderstand nach einem der Ansprüche 1 oder 2, wobei das mindestens eine Widerstandselement (1) ein Widerstandselement mit positivem Temperaturkoeffizienten ist.

6. Elektrischer Bremswiderstand nach einem der Ansprüche 1 bis 5, wobei das wärmeleitende Gehäuse (2) ein Kühlkörper aus einem metallischen Werkstoff, vorzugsweise Aluminium, ist.

7. Elektrischer Bremswiderstand nach einem der Ansprüche 1 bis 6, wobei das wärmeleitende Gehäuse (2) ein Kühlkörper aus einem Strangpressprofil ist.

8. Elektrischer Bremswiderstand nach einem der Ansprüche 1 bis 7, der mindestens zwei Widerstandselemente (1) aufweist, die elektrisch verbunden sind.

9. Elektrischer Bremswiderstand nach Anspruch 8, wobei die mindestens zwei Widerstandselemente (1) in Reihe geschaltet sind.

10. Elektrischer Bremswiderstand nach Anspruch 8, wobei die mindestens zwei Widerstandselemente (1) parallel geschaltet sind.

11. Verfahren zum Herstellen eines elektrischen Bremswiderstands, das die folgenden Schritte aufweist:
Einlegen mindestens eines Widerstandselements (1) in ein wärmeleitendes Gehäuse (2), wobei das wärmeleitende Gehäuse (2) so mit einer Isolierstoffmasse (3) ausgefüllt wird, dass das mindestens eine Widerstandselement (1) unmittelbar in die Isolierstoffmasse (3) eingebettet ist.

12. Verfahren nach Anspruch 11, wobei das Ausfüllen des wärmeleitenden Gehäuses (2) mit der Isolierstoffmasse (3) das Injizieren einer Vergussmasse umfasst.

13. Verfahren nach Anspruch 11, wobei das Ausfüllen des wärmeleitenden Gehäuses (2) weiterhin das Einpressen einer aus dem Widerstandselement (1) und der Isolierstoffmasse (3) bestehenden vorgefertigten Einheit in das wärmeleitende Gehäuse (2) umfasst.

14. Verfahren nach einem der Ansprüche 11 bis 13, wobei das Verfahren weiterhin das elektrische Verbinden der mindestens zwei Widerstandselemente (1) umfasst.

15. Verfahren nach Anspruch 14, wobei das Verfahren weiterhin das Herstellen einer Reihenschaltung von mindestens zwei Widerstandselementen (1) aufweist.

16. Verfahren nach Anspruch 14, wobei das Verfahren weiterhin das Herstellen einer Parallelschaltung von mindestens zwei Widerstandselementen (1) aufweist.
